# EUROPÄISCHE PATENTSCHRIFT

(11) **EP 0 921 942 B1**
(45) Veröffentlichungstag und Bekanntmachung des Hinweises auf die Patenterteilung: **21.11.2001**
(21) Anmeldenummer: 97936675.4
(22) Anmeldetag: 29.07.1997
(51) Int. Cl.: B32B 31/10, B32B 31/12, G08B 13/24

(54) **VERFAHREN UND VORRICHTUNG ZUM AUFBRINGEN VON MATERIALABSCHNITTEN AUF EINE MATERIALBAHN**
PROCESS AND DEVICE FOR APPLYING SECTIONS OF MATERIAL ON A MATERIAL WEB
PROCEDE ET DISPOSITIF POUR APPLIQUER DES SEGMENTS DE MATERIAU SUR UNE BANDE DE MATERIAU

(30) Priorität: 07.08.1996 DE 19631852
(43) Veröffentlichungstag der Anmeldung: 16.06.1999
(73) Patentinhaber: Meto International GmbH, 69434 Hirschhorn/Neckar (DE)
(72) Erfinder: RÜHRIG, Manfred, D-69469 Weinheim (DE); KLASSEN, Gordon, Duarte, CA 91010 (US)
(74) Vertreter: Menges, Rolf, Dipl.-Ing.
(86) Internationale Anmeldenummer: EP9704114
(87) Internationale Veröffentlichungsnummer: WO9805500

(56) Entgegenhaltungen:
- EP-A- 0 359 057
- EP-A- 0 756 256
- WO-A-97/02723
- DE-A- 4 239 846

## Beschreibung

Die Erfindung betrifft ein Verfahren nach den unabhängigen Ansprüchen 1 und 2, eine Vorrichtung zur Durchführung des Verfahrens nach dem Oberbegriff der abhängigen Ansprüche 9 und 10 und ein Laminat nach dem Oberbegriff des abhängigen Anspruches 15.

Es handelt sich dabei um ein Verfahren zum Zusammenführen einer ersten Materialbahn und einer zweiten Materialbahn, wobei die erste Materialbahn in einzelne Abschnitte einer vorgegebenen Länge unterteilt wird, während die zweite Materialbahn kontinuierlich ist. Insbesondere handelt es sich bei den Abschnitten der ersten Materialbahn um halbhart- oder hartmagnetische Abschnitte und bei der zweiten Materialbahn um eine weichmagnetische Materialbahn (--> deaktivierbare Sicherungselemente). Es kann sich jedoch auch bei den Abschnitten der ersten Materialbahn um Abschnitte eines weichmagnetischen Materials handeln, während es sich bei der zweiten Materialbahn um eine durchgehende Trägerschicht handelt, die z.B. aus Papier oder Kunststoff gefertigt ist (--> nicht-deaktivierbare Sicherungselemente).

Weichmagnetische Materialien (z.B. Permalloy) zeichnen sich durch eine hohe Permeabiliät und eine geringe Koerzitivkraft aus. Sie werden in zunehmendem Maße zur elektronischen Artikelsicherung in Kaufhäusern und Lagern eingesetzt. Hierzu wird in eine Überwachungszone, die bevorzugt im Ein/Ausgangsbereich des zu sichernden Bereiches angeordnet ist, ein magnetischen Wechselfeld ausgestrahlt. Dieses Feld regt das weichmagnetische Material des elektronischen Sicherungselementes zur Ausstrahlung eines charakteristischen Signals an. Dieses Signal wird nachfolgend von einer im Frequenzbereich des Signals empfindlichen Detektoreinrichtung erfaßt und als Identifizierungssignal für eine in unerlaubter Weise die Überwachungszone passierende Ware ausgewertet; ein Alarm wird ausgelöst.

Selbstverständlich soll die Detektoreinrichtung nicht mehr ansprechen, sobald die Ware ordnungsgemäß bezahlt worden ist. Diesem Zwecke dienen halbhart- oder hartmagnetische streifenförmige Abschnitte. Halbhart- oder hartmagnetisches Material (z.B. SEMIVAVC der Firma Vacuumschmelze) besitzt eine relativ hohe Koerzitivkraft. Infolge der hohen Koerzitivkraft wird das Deativatormaterial im nicht-deaktivierten Zustand durch das magnetische Wechselfeld in der Überwachungszone nicht beeinflußt. Sobald das Deaktivatormaterial jedoch durch ein entsprechend hohes Magnetfeld in die Sättigung getrieben wird - was nach ordnungsgemäßer Bezahlung der Ware erfolgt - unterbindet seine Magnetisierung eine Reaktion des weichmagnetischen Materials auf das magnetische Wechselfeld in der Überwachungszone.

Deaktivierbare Sicherungselemente werden in großen Stückzahlen verwendet. Da jedes Sicherungselement üblicherweise nur einmal zur Artikelsicherung eingesetzt wird, liegt ein besonderes Augenmerk auf einer kostengünstigen Fertigung.

Aus der DE 42 23 394 A1 ist bereits ein Verfahren zur Herstellung von Sicherungsetiketten bekannt geworden, das die folgenden Fertigungsschritte umfaßt: auf ein nichtmetallisches Band werden ein hartmagnetischer Metallstreifen und danach auf den Metallstreifen eine Trägerfolie aufgeklebt, die in der Dicke hohe Flexibilität aufweist. Insbesondere ist die Trägerfolie derart dick und flexibel, daß die Deformation des Metallstreifen durch ein rotierendes Stanzmesser ausreichend ist, um den Metallstreifen in einzelne Abschnitte zu trennen. Die herausgetrennten Abschnitte des Metallstreifens und des nicht-metallischen Bandes werden von der Trägerfolie abgezogen, und auf die verbleibenden Teile des Metallstreifens wird anschließend ein weichmagnetisches Band aufgebracht. Um ein fertiges Etikettenband herzustellen, wird - wie allgemein üblich - auf eine Seite des Bandes Etikettenpapier und auf die andere Seite ein Trägerband aufgeklebt.

Zweifellos ist dieses bekanntgewordene Verfahren bestens für die Bereitstellung hoher Stückzahlen von Sicherungselementen geeignet. Weniger zufriedenstellend ist jedoch der relativ hohe Aufwand, der bei der Herstellung und Aufbringung der halbhart- oder hartmagnetischen Abschnitte auf den weichmagnetischen Streifen betrieben werden muß. Nachteilig ist auch der Verlust an halbhart- oder hartmagnetischem Material infolge des Ausstanzens.

Ein alternatives Verfahren und eine alternative Vorrichtung zur Herstellung eines Laminats sind aus der EP 0 359 057 bekannt geworden. Ein erster Materialstreifen wird quer zu seiner Laufrichtung derart verformt, daß er Falten bzw. Erhebungen aufweist. Auf den derart präparierten ersten Materialstreifen wird ein weiterer Materialstreifen, der vorzugsweise aus Aluminium besteht, auflaminiert. Der weitere Materialstreifen wird im Bereich der quer verlaufenden Verformungen durchtrennt. Anschließend wird der erste Materialstreifen glatt gezogen, wodurch die einzelnen Abschnitte der weiteren Materialbahn nachfolgend einen Abstand zueinander aufweisen, der durch die Verformung vorgegeben war.

Der Erfindung liegt die Aufgabe zugrunde ein Verfahren, ein mittels des Verfahrens hergestelltes Laminat und eine Vorrichtung vorzuschlagen, wobei Abschnitte einer ersten Materialbahn verlustfrei auf eine zweite Materialbahn aufgebracht werden können. Insbesondere handelt es sich -wie bereits an vorhergehender Stelle erwähnt- bei den Abschnitten der ersten Materialbahn um halbhart- oder hartmagnetische Abschnitte und bei der zweiten Materialbahn um eine weichmagnetische Materialbahn. Es kann sich jedoch auch bei den Abschnitten der ersten Materialbahn um Abschnitte eines weichmagnetischen Materials handeln, während es sich bei der zweiten Materialbahn um eine durchgehende Trägerschicht handelt, die z.B. aus Papier oder Kunststoff gefertigt ist.

Die Aufgabe wird bezüglich des Verfahrens gemäß Anspruch 1 unter Verwendung einer dehnbaren Trägerschicht und alternativ gemäß Anspruch 2 unter Verwendung einer nicht-dehnbaren Trägerschicht gelöst.

Gemäß einer vorteilhaften Weiterbildung des erfindungsgemäßen Verfahrens ist vorgesehen, daß die Trägerschicht aus einem dehnbaren Material gefertigt wird und eine Breite aufweist, die kleiner, gleich oder größer als die Breite der ersten Materialbahn ist.

Als besonders vorteilhaft hat es sich bei Verwendung einer dehnbaren Trägerschicht herausgestellt, wenn diese maximal die Breite der ersten Materialbahn aufweist. Anschließend wird lediglich die erste Materialbahn in einzelne Abschnitte unterteilt, während die Trägerschicht als kontinuierliche Schicht erhalten bleibt. Vorzugsweise kann das Durchtrennen der halbhart- oder hartmagnetischen Materialbahn in einzelne Abschnitte mittels eines Lasers erfolgen.

Eine alternative Ausgestaltung des erfindungsgemäßen Verfahrens schlägt vor, daß die Trägerschicht breiter als die erste Materialbahn ist und daß die erste Materialbahn und die Trägerschicht zumindest über die Breite der ersten Materialbahn in einzelne Abschnitte unterteilt werden. In diesem Fall kann die Trägerschicht ebenfalls dehnbar sein, diese Eigenschaft ist für das Funktionieren des Verfahrens jedoch ohne Belang.

Gemäß einer vorteilhaften Weiterbildung des erfindungsgemäßen Verfahrens ist vorgesehen, daß die Trägerschicht im Bereich der Unterteilungen der ersten Materialbahn derart gedehnt wird, daß die Abschnitte der ersten Materialbahn einen gewünschten Abstand voneinander haben. Diese Dehnung tritt bei unbearbeiteter Trägerschicht natürlich nur dann auf, wenn diese aus einem streckbaren Material genügend hoher Reißfestigkeit gefertigt ist.

Um einen Abstand zwischen den einzelnen Abschnitten der halbhart- oder hartmagnetischen Materialbahn bei nicht-dehnbarer Trägerschicht herzustellen, ist es erforderlich, die erste Materialbahn und die Trägerschicht zumindest über die Breite der ersten Materialbahn in einzelne Abschnitte zu unterteilen. Anschließend werden die erste Materialbahn und die Trägerschicht im Bereich der Unterteilungen derart auseinandergezogen, daß die einzelnen Abschnitte einen gewünschten Abstand voneinander haben.

Die Aufgabe wird bezüglich der Vorrichtung gemäß den Ansprüchen 10 und 11 für eine dehnbare bzw. eine nicht-dehnbare Trägerschicht gelöst.

Vorteilhafterweise bestehen die einzelnen Stationen der Vorrichtung jeweils aus zumindest einem Walzenpaar.

Gemäß einer vorteilhaften Weiterbildung der erfindungsgemäßen Vorrichtung wird angeregt, eine Walze des Walzenpaares der weiteren Station als Umlenkwalze für das Laminat aus erster Materialbahn und Trägerschicht auszubilden. Weiterhin hat das Walzenpaar der weiteren Station eine größere Arbeitsgeschwindingkeit (Umfangsgeschwindigkeit) als das Walzenpaar der Schneidestation. Die Dehnung der flexiblen Trägerschicht im Bereich der Unterteilungen bzw. das Auseinanderziehen der einzelnen Abschnitte von erster Materialbahn und Trägerschicht erfolgt somit in einfacher Weise über zwei unterschiedliche Arbeitsgeschwindigkeiten in den beiden Stationen.

Eine alternative Ausführungsform der erfindungsgemäßen Vorrichtung sieht bei Verwendung einer nicht-dehnbaren Trägerschicht vor, daß eine Walze des Walzenpaares in dem Bereich, in dem die erste Materialbahn geführt wird, einen größeren Umfang besitzt als in den Bereichen, in denen die überstehenden Ränder der Trägerschicht geführt werden. Die unterschiedliche Arbeitsgeschwindigkeit wird hierbei also nicht durch unterschiedliche Ansteuerungen der einzelnen Stationen erreicht, sondern einfach durch Vergrößerung des Umfangs des Umlenkzylinders. Hiermit geht gleichfalls ein Vergrößerung der Umfangsgeschwindigkeit des Umlenkzylinders im Bereich der Führung der ersten Materialbahn einer.

Die Aufgabe wird bezüglich des Laminats gemäß Anspruch 15 für eine dehnbare Trägerschicht und gemäß Anspruch 16 für eine nicht-dehnbare Trägerschicht gelöst.

Vorteilhafte Ausgestaltungen des Laminats nach der Erfindung bilden die Gegenstände der Ansprüche 17 und 18.

Die Erfindung wird anhand der nachfolgenden Figuren naher erläutert. Es zeigt:
Fig. 1: einen Längsschnitt durch eine erste vorteilhafte Ausführungsform der erfindungsgemäßen Vorrichtung,
Fig. 2a: einen Querschnitt durch einen Zylinder, der bei einer zweiten Ausführungsform der erfindungsgemäßen Vorrichtung eingesetzt wird,
Fig. 2b: den in Fig. 2a dargestellten Zylinder in Draufsicht,
Fig. 3a: eine Draufsicht auf ein Laminat aus flexibler Trägerschicht und unterteilter erster Materialbahn,
Fig. 3b: das in Fig. 3a dargestellte Laminat nach der Dehnung der flexiblen Trägerschicht,
Fig. 4a: eine Draufsicht auf ein Laminat aus flexibler, unterteilter Trägerschicht und unterteilter erster Materialbahn,
Fig. 4b: das in Fig. 4a dargestellte Laminat nach der Dehnung der flexiblen Trägerschicht,
Fig. 5: eine Draufsicht auf das fertige Laminat bei Entfernen der überstehenden Ränder der Trägerschicht,
Fig. 6: eine Draufsicht auf das fertige Laminat bei Abziehen der Trägerschicht,
Fig. 7: eine Draufsicht auf ein Laminat aus nicht flexibler Tragerschicht und erster Materialbahn nach dem Auseinanderziehen der einzelnen Abschnitte der ersten Materialbahn und der Trägerschicht,
Fig. 8: eine Draufsicht auf das fertige Laminat bei Entfernen der überstehenden Ränder der Trägerschicht,
Fig. 9: eine Draufsicht auf das fertige Laminat bei Abziehen der Trägerschicht und
Fig. 10: einen Längsschnitt durch eine bevorzugte Ausführungsform der erfindungsgemäßen Vorrichtung.

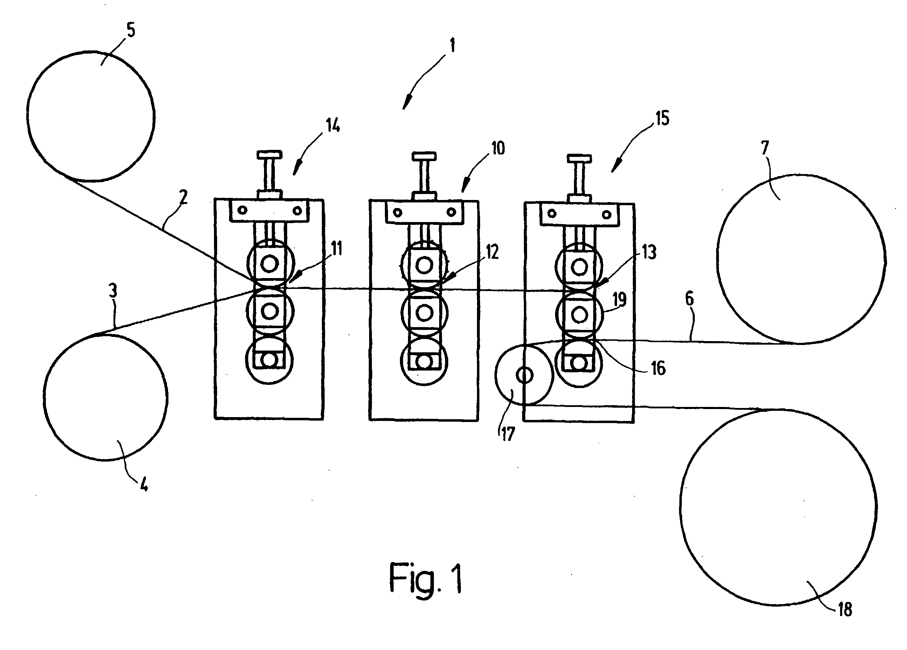

Fig. 1 zeigt einen Längsschnitt durch eine erste vorteilhafte Ausführungsform der erfindungsgemäßen Vorrichtung 1. Die Vorrichtung besteht aus drei Stationen: einer Laminierstation 14, einer Schneidestation 10 und einer weiteren Station 15. Jede der Stationen 14, 10, 15 weist jeweils zumindest ein Walzenpaar 11, 12, 13 auf. Durch den Spalt der Walzenpaare 11, 12, 13 wird ein Laminat, bestehend aus einer Trägerschicht 3 und einer halbhart- oder hartmagnetischen Materialbahn 2 hindurchgeführt.

Die erste Materialbahn 2 wird von der Vorratsrolle 5, die Trägerschicht 3 von der Vorratsrolle 4 abgewickelt. Bei der Trägerschicht 3 kann es sich beispielsweise um Polyäthylen (PE) oder Polyvinylchlorid (PVC) handeln. In der Laminierstation 14 wird die erste Materialbahn 2 auf die Trägerschicht 3 auflaminiert. In der Schneidestation 10 wird die erste Materialbahn 2 und eventuell auch die Trägerschicht 3 zumindest über die Breite der ersten Materialbahn 2 in einzelne Abschnitte 8 unterteilt. Um einen Abstand zwischen den einzelnen Abschnitten 8 der ersten Materialbahn 2 bzw. der ersten Materialbahn 2 und der Trägerschicht 3 zu erreichen, hat die weitere Station 15 eine hohere Arbeitsgeschwindingkeit als die Schneidestation 10. Durch die unterschiedlichen Umfangsgeschwindigkeiten der Walzenpaare 12, 13 der beiden Stationen 10, 15 wird das aus Tragerschicht 3 und erster Materialbahn 2 gebildete Laminat im Bereich der Unterteilungen 9 gedehnt bzw. auseinandergezogen. Der Abstand a der einzelnen Abschnitte 8 hangt hierbei von der Differenz der Relativgeschwindigkeiten der beiden Walzenpaare 12, 13 ab und kann in weitem Rahmen beliebig gesteuert werden.

Wie weiter aus Fig. 1 ersichtlich ist, wird das aus erster Materialbahn 2 und Trägerschicht 3 gebildete Laminat über den unteren Zylinder 19 des Walzenpaares 13 umgelenkt. Dem Zylinder 19 ist eine Laminiereinrichtung 16 zugeordnet, über die eine zweite, weichmagnetische Materialbahn 6 zu dem Laminat 2,3 hinzugefügt wird. Bevor das fertige Laminat 20, gebildet aus weichmagnetischer Materialbahn 6 und Abschnitten 8 des halbhart- oder hartmagnetischen Bahnmaterials 2, auf die Speicherrolle 18 gewickelt wird, wird die Trägerschicht 3 vollständig entfernt; zumindest scheint es jedoch erforderlich, die überstehenden Ränder abzuschneiden. Beide Maßnahmen elimieren bzw. reduzieren die Spannung des fertigen Laminats 20, das anschließend z.B. bei der elektronischen Artikelsicherung in Kaufhäusern zum Einsatz kommt. Nähere Angaben hierzu sind den nachfolgenden Figuren zu entnehmen.

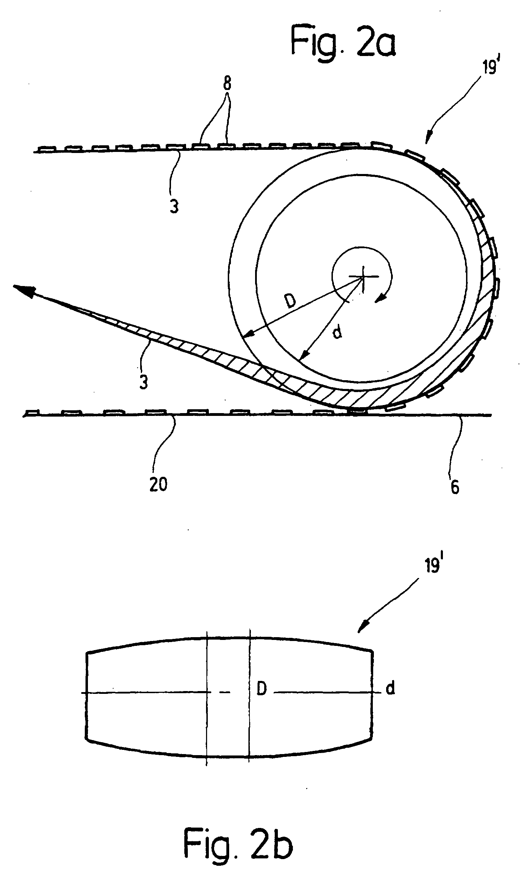

In Fig. 2a ist ein Querschnitt durch einen Zylinder 19', der bei einer zweiten Ausführungsform der erfindungsgemäßen Vorrichtung eingesetzt wird, dargestellt. Fig. 2b zeigt den in Fig. 2a dargestellten Zylinder 19' in Draufsicht. Der Zylinder 19' weist unterschiedliche Durchmesser auf: während der äußere Durchmesser d dem Durchmesser der übrigen in Fig. 1 dargestellten Zylinder der Walzenpaare 11, 12, 13 entspricht, weist der mittlere Bereich, der das halbhart- oder hartmagnetische Bahnmaterial 2 führt, einen größeren Durchmesser D auf. Was gemäß der in Fig. 1 gezeigten Ausführungsform durch unterschiedliche Umfangsgeschwindigkeiten der Walzenpaare 12, 13 erreicht wird, wird hier durch den größeren Durchmesser D im Bereich der Führung der ersten Materialbahn 2 erzielt. Vorteilhafterweise wird bei dieser Ausgestaltung die gebogene Trägerschicht 3 vollständig von den Abschnitten 8 der ersten Materialbahn 2 entfernt, sobald diese mit der zweiten Materialbahn 6 verbunden sind.

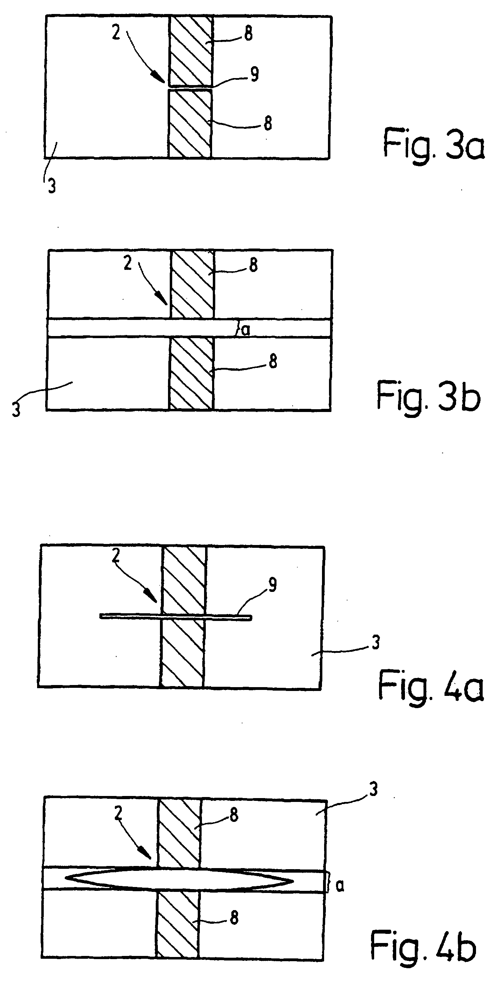

In Fig. 3a ist eine Draufsicht auf ein Laminat aus flexibler Trägerschicht 3 und unterteilter erster Materialbahn 2 dargestellt. Wie bereits an vorhergehender Stelle erwähnt, ist es bei Verwendung einer dehnbaren Trägerschicht 3 ausreichend, lediglich die erste Materialbahn 2 in einzelne Abschnitte 8 zu unterteilen. Daher kann die Trägerschicht 3 jede beliebige Breite aufweisen: sie kann schmäler oder breiter sein als die erste Materialbahn 2. Sie kann jedoch genauso gut die gleiche Breite aufweisen.

Wie aus Fig. 3b zu ersehen ist, dehnt sich die flexible Trägerschicht 3 im Bereich der Unterteilung 9 der ersten Materialbahn 2 in Längsrichtung. Die beiden Abschnitte 8 sind nach erfolgter Dehnung nunmehr im Abstand a voneinander angeordnet.

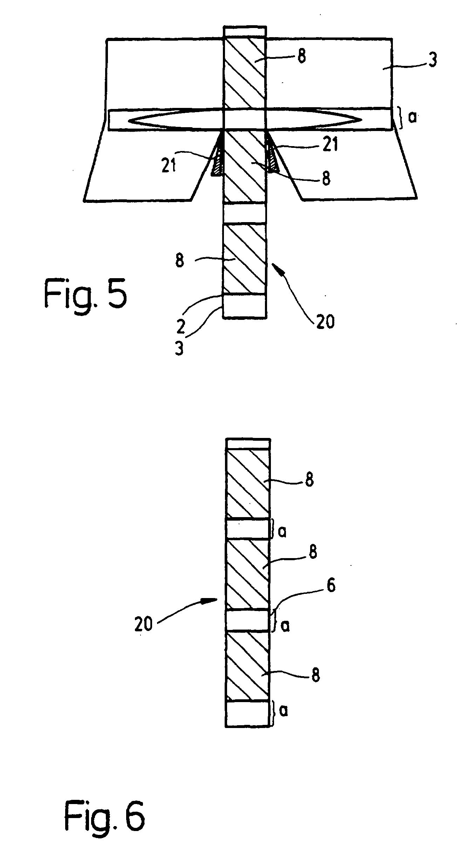

In Fig. 4a ist eine Draufsicht auf ein Laminat aus flexibler, unterteilter Trägerschicht 3 und unterteilter erster Materialbahn 2 zu sehen. Fig. 4b zeigt das in Fig. 4a dargestellte Laminat nach der Dehnung der flexiblen Trägerschicht 3. Während gemäß der Ausgestaltung, die in den Figuren Fig. 3a und Fig. 3b gezeigt ist, lediglich die erste Materialbahn 2 in einzelne Abschnitte 8 unterteilt ist, ist in dem hier dargestellten Fall auch die Trägerschicht 3 unterteilt. Hierdurch wird die Spannung in dem Laminat reduziert.

Um die Spannung des Laminats 20 weiter zu reduzieren, werden entweder die uberstehenden Ränder der Tragerschicht 3 mittels der Schneidevorrichtungen 21 abgeschnitten - diese Möglichkeit ist in Fig. 5 zeichnerisch dargestellt - oder die Trägerschicht 3 wird - wie in Fig. 6 dargestellt - vollständig von dem Laminat aus weichmagnetischer Materialbahn 6 mit aufgebrachten Abschnitten 8 aus halbhart- oder hartmagnetischem Material 2 abgezogen.

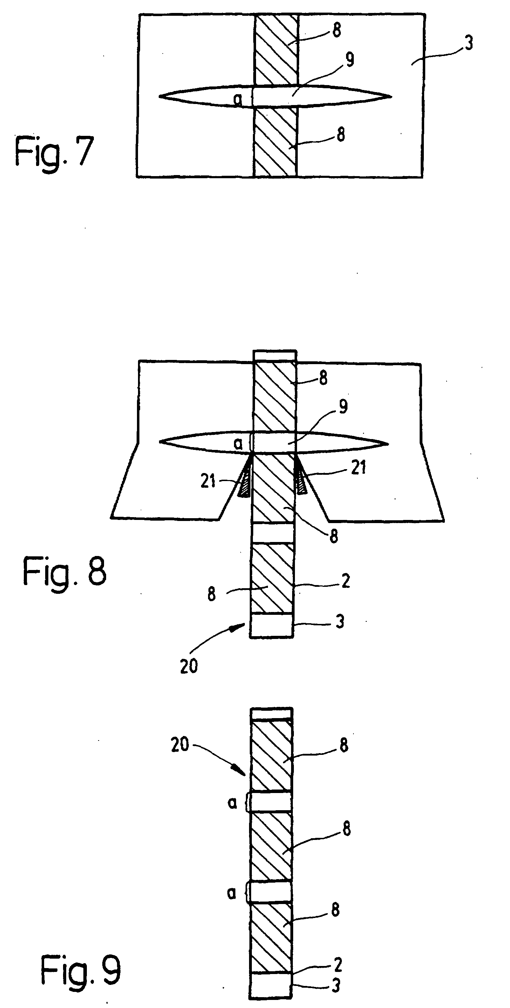

Fig. 7 zeigt eine Draufsicht auf ein Laminat 20 aus nicht flexibler Trägerschicht 3 und erster Materialbahn 2 nach dem Auseinanderziehen der einzelnen Abschnitte 8 der ersten Materialbahn 3 und der Trägerschicht 2. Gemäß einer vorteilhaften Weiterbildung wird auf das Laminat noch ein kontinuierlicher Streifen, der vorzugsweise aus Kunststoff (z.B. Polyester) besteht, aufgebracht. Dieser Streifen trägt dazu bei, daß das Laminat eine kompakte Einheit bildet, wodurch es nachfolgend besser weiterverarbeitet werden kann.

In Fig. 8 ist eine Draufsicht auf das fertige Laminat 20 bei Entfernen der überstehenden Ränder der Trägerschicht 3 zu sehen. Fig. 9 zeigt eine Draufsicht auf das fertige Laminat 20, wobei die Trägerschicht 3 von der weichmagnetischen Materialbahn 6 mit auflaminierten Abschnitten 8 von halbhart- oder hartmagnetischem Material vollständig abgezogen wurde.

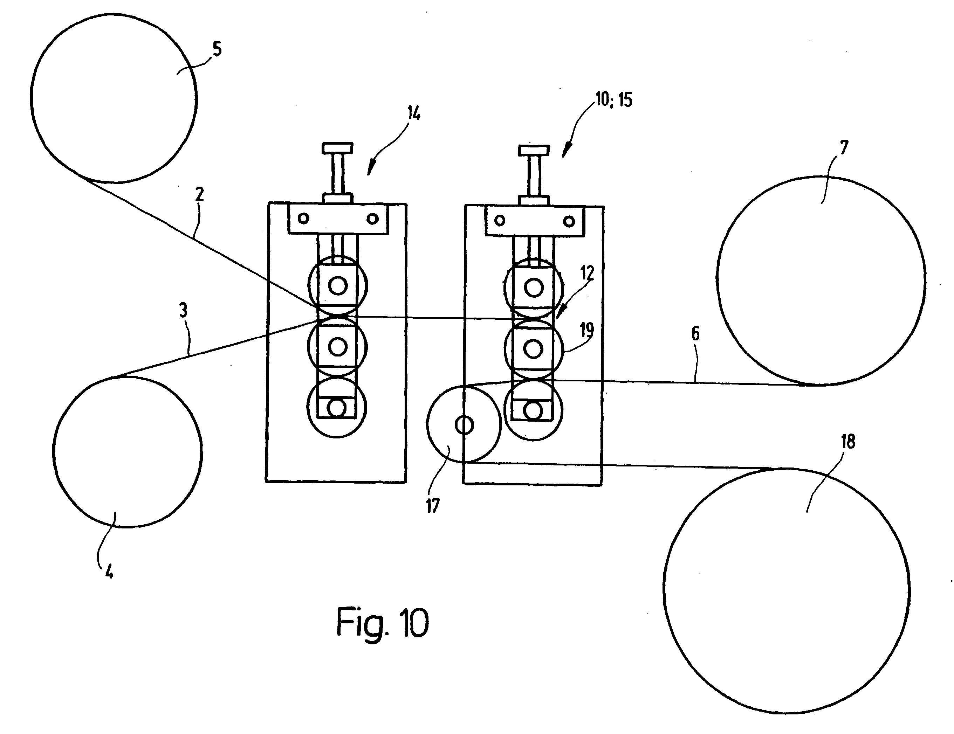

In Fig. 10 ist eine bevorzugte Ausführungsform der erfindungsgemäßen Vorrichtung dargestellt. Im Unterschied zu der in Fig. 1 gezeigten Vorrichtung erfolgen sowohl das Schneiden der ersten Materialbahn 2 bzw. das Schneiden von erster Materialbahn 2 und Trägerschicht 3 sowie das Auflaminieren auf die zweite Materialbahn in einer Station. Der Schneidezylinder, also im dargestellten Fall der obere der beiden Zylinder des Walzenpaares 12, hat eine kleinere Umfangsgeschwindigkeit als der Umlenkzylinder 19 und der unterhalb des Umlenkzylinders angeordnete Gegendruckzylinder 22.

### Bezugszeichenliste

- 1: erfindungsgemaße Vorrichtung
- 2: erste (halbhart- oder hartmagnetische)Materialbahn
- 3: Tragerschicht
- 4: Vorratsrolle
- 5: Vorratsrolle
- 6: zweite (weichmagnetische) Materialbahn
- 7: Vorratsrolle
- 8: Abschnitt
- 9: Unterteilung
- 10: Schneidestation
- 11: Walzenpaar
- 12: Walzenpaar
- 13: Walzenpaar
- 14: Laminierstation
- 15: weitere Station
- 16: Laminiereinrichtung
- 17: Umlenkwalze
- 18: Speicherrolle
- 19: unterer Zylinder
- 20: Laminat
- 21: Schneidevorrichtung
- 22: Gegendruckzylinder

## Patentansprüche

1. Verfahren zum Zusammenführen einer ersten Materialbahn und einer zweiten Materialbahn,
wobei die erste Materialbahn (2) auf eine dehnbare Trägerschicht (3) aufgebracht wird,
wobei die erste Materialbahn in einzelne Abschnitte (8) einer vorgegebenen Länge (L) unterteilt wird,
wobei jeweils zwei aufeinanderfolgende Abschnitte (8) der ersten Materialbahn (2) voneinander getrennt werden, indem die Trägerschicht (3) gedehnt wird, so daß die Abschnitte (8) einen vorgegebenen Abstand (a) voneinander haben, und
wobei die Abschnitte (8) im Abstand (a) auf die zweite kontinuierliche Materialbahn (6) aufgebracht werden.

2. Verfahren zum Zusammenführen einer ersten Materialbahn und einer zweiten Materialbahn,
wobei die erste Materialbahn (2) auf eine nicht-dehnbare Trägerschicht (3) aufgebracht wird,
wobei die erste Materialbahn (2) und die nicht-dehnbare Trägerschicht (3) zumindest über die Breite der ersten Materialbahn (2) in einzelne Abschnitte (8) einer vorgegebenen Länge (L) unterteilt werden,
wobei jeweils zwei aufeinanderfolgende Abschnitte (8) der ersten Materialbahn (2) voneinander getrennt werden, indem die Trägerschicht (3) im Bereich der Unterteilungen auseinandergezogen wird, so daß die Abschnitte (8) einen vorgegebenen Abstand (a) voneinander haben, und
wobei die Abschnitte (8) im Abstand (a) auf die zweite kontinuierliche Materialbahn (6) aufgebracht werden.

3. Verfahren nach Anspruch 1,
wobei die Trägerschicht (3) aus einem elastischen Material besteht und eine Breite aufweist, die kleiner, gleich oder größer als die Breite der ersten Materialbahn (2) ist.

4. Verfahren nach Anspruch 1,
wobei die Trägerschicht (3) aus einem plastisch verformbaren Material kleiner Dehngrenze, aber genügend hoher Reißfestigkeit gefertigt wird und eine Breite aufweist, die kleiner, gleich oder größer als die Breite der ersten Materialbahn (2) ist.

5. Verfahren nach Anspruch 1, 3 oder 4,
wobei die Trägerschicht (3) maximal die Breite der ersten Materialbahn (2) aufweist und daß nur die erste Materialbahn (2) in einzelne Abschnitte (8) unterteilt wird.

6. Verfahren nach Anspruch 1, 3 oder 4,
wobei die Trägerschicht (3) breiter als die erste Materialbahn (2) ist und daß die erste Materialbahn (2) und die Trägerschicht (3) zumindest über die Breite der ersten Materialbahn (2) in einzelne Abschnitte (8) unterteilt werden.

7. Verfahren nach Anspruch 5,
wobei die Trägerschicht (3) im Bereich der Unterteilungen (9) der ersten Materialbahn (2) derart gedehnt wird, daß die Abschnitte (8) der ersten Materialbahn (2) einen gewünschten Abstand (a) voneinander haben.

8. Verfahren nach Anspruch 6,
wobei die erste Materialbahn (2) und die Trägerschicht (3) im Bereich der Unterteilungen (9) von erster Materialbahn (2) und Trägerschicht (3) derart auseinandergezogen werden, daß die einzelnen Abschnitte (8) einen gewünschten Abstand (a) voneinander haben.

9. Vorrichtung zur Durchführung des Verfahrens nach Anspruch 1,
wobei eine Schneidestation (10) vorgesehen ist zum Unterteilen der auf eine dehnbare Trägerschicht (3) aufgebrachten ersten Materialbahn (2) in einzelne Abschnitte (8),
wobei eine weitere Station (15) vorgesehen ist zum Auseinanderziehen der einzelnen Abschnitte (8) der ersten Materialbahn (2) durch Dehnung der Trägerschicht (3), und
wobei der weiteren Station (15) eine Laminiereinrichtung (16) zugeordnet ist zum Aufbringen der voneinander beabstandeten Abschnitte (8) der ersten Materialbahn (2) auf die zweite Materialbahn (6).

10. Vorrichtung zur Durchführung des Verfahrens nach Anspruch 2,
wobei eine Schneidestation (10) vorgesehen ist zum Unterteilen der nicht-dehnbaren Trägerschicht (3) und der auf ihr aufgebrachten ersten Materialbahn (2) zumindest über die Breite der ersten Materialbahn (2) in einzelne Abschnitte (8) der Länge (L),
wobei eine weitere Station (15) vorgesehen ist zum Auseinanderziehen der Trägerschicht (3) und damit der einzelnen Abschnitte (8) der ersten Materialbahn (2) im Bereich der Unterteilungen, und
wobei der weiteren Station (15) eine Laminiereinrichtung (16) zugeordnet ist zum Aufbringen der voneinander beabstandeten Abschnitte (8) der ersten Materialbahn (2) auf die zweite Materialbahn (6).

11. Vorrichtung nach Anspruch 9 oder 10,
wobei die einzelnen Stationen (10; 14; 15) jeweils zumindest aus einem Walzenpaar (11; 12; 13) bestehen.

12. Vorrichtung nach Anspruch 11,
wobei eine Walze des Walzenpaares (13) der weiteren Station (15) als Umlenkwalze (19) für das Laminat (20) aus erster Materialbahn (2) und Trägerschicht (3) ausgebildet ist und
eine größere Arbeitsgeschwindingkeit (Umfangsgeschwindigkeit) aufweist als das Walzenpaar (12) der Schneidestation (10).

13. Vorrichtung nach Anspruch 9 oder 10,
wobei die Schneidevorrichtung (21) und die Laminiereinrichtung (16) in einer Station (10,15) angeordnet sind und wobei die als Zylinder ausgebildete Schneidevorrichtung (21) eine kleinere Umfangsgeschwindigkeit aufweist als die als Zylinder ausgebildete Laminiereinrichtung (16).

14. Vorrichtung nach Anspruch 11 oder 13,
wobei eine Walze (19') des Walzenpaares (13) in dem Bereich, in dem die erste Materialbahn (2) geführt wird, einen größeren Umfang besitzt als in den Bereichen, in denen die überstehenden Ränder der Trägerschicht (3) anliegen.

15. Laminat zur Herstellung von Sicherungselementen für die elektronische Artikelsicherung, gefertigt nach dem in Anspruch 1 oder dem in den Ansprüchen 3 bis 7 beschriebenen Verfahren,
wobei das Laminat folgende Zusammensetzung aufweist:
eine erste Materialbahn (2), die in einzelne Abschnitte (8) unterteilt ist;
eine dehnbare Trägerschicht (3) , die so gedehnt ist, daß die Abschnitte (8) einen Abstand (a) voneinander haben;
eine zweite Materialbahn (6), auf die die Abschnitte (8) aufgebracht sind.

16. Laminat zur Herstellung von Sicherungselementen für die elektronische Artikelsicherung, gefertigt nach dem in Anspruch 2 beschriebenen Verfahren,
wobei das Laminat folgende Zusammensetzung aufweist:
eine nicht-dehnbare Trägerschicht und eine erste Materialbahn (2), die zumindest über die Breite der ersten Materialbahn (2) in einzelne Abschnitte (8) der Länge (L) unterteilt sind, wobei die nicht-dehnbare Trägerschicht (3) im Bereich der Unterteilungen derart auseinandergezogen ist, daß die Abschnitte (8) der ersten Materialbahn (2) einen Abstand (a) voneinander haben;
eine zweite Materialbahn (6), auf die die Abschnitte (8) aufgebracht sind.

17. Laminat nach Anspruch 15 oder 16,
wobei es sich bei der ersten Materialbahn (2) um ein weichmagnetisches Material handelt und
wobei die zweite Materialbahn (6) aus Papier oder Kunststoff gefertigt ist.

18. Laminat nach Anspruch 15 oder 16,
wobei es sich bei der ersten Materialbahn (2) um ein halbhart- oder hartmagnetisches Material handelt und
wobei die zweite Materialbahn (6) aus einem weichmagnetischen Streifenmaterial besteht.

## Claims

1. A method of joining a first web material to a second web material, comprising the steps of
applying the first web material (2) to an extendible substrate (3),
dividing the first web material into individual sections (8) of a predetermined length (L),
separating every two successive sections (8) of the first web material (2) from each other by extending the substrate (3) so that the sections (8) are spaced by a predetermined relative distance (a), and
applying the sections (8) to the second continuous web material (6) at said relative distance (a).

2. A method of joining a first web material to a second web material, comprising the steps of
applying the first web material (2) to a non-extendible substrate (3),
dividing the first web material (2) and the non-extendible substrate (3) into individual sections (8) of a predetermined length (L) at least across the width of the first web material (2),
separating every two successive sections (8) of the first web material (2) from each other by pulling the substrate (3) apart in the area of the divisions so that the sections (8) are spaced by a predetermined relative distance (a), and
applying the sections (8) to the second continuous web material (6) at said relative distance (a).

3. The method as claimed in claim 1
wherein the substrate (3) is made of an elastic material and has a width smaller than, equal to or greater than the width of the first web material (2).

4. The method as claimed in claim 1
wherein the substrate (3) is fabricated from a plastically deformable material of a low yield point and yet sufficiently high tear resistance and has a width smaller than, equal to or greater than the width of the first web material (2).

5. The method as claimed in claim 1, 3 or 4
wherein the width of the substrate (3) does not exceed the width of the first web material (2), and only the first web material (2) is divided into individual sections (8).

6. The method as claimed in claim 1, 3 or 4
wherein the substrate (3) is wider than the first web material (2), and the first web material (2) and the substrate (3) are divided into individual sections (8) at least across the width of the first web material (2).

7. The method as claimed in claim 5
wherein the substrate (3) is stretched in the area of the divisions (9) of the first web material (2), such that the sections (8) of the first web material (2) are spaced from each other by a desired distance (a).

8. The method as claimed in claim 6
wherein the first web material (2) and the substrate (3) are pulled apart in the area of the divisions (9) of the first web material (2) and the substrate (3), such that the individual sections (8) are at a desired relative distance (a).

9. A device for implementing the method of claim 1
wherein provision is made for a cutting station (10) for dividing the first web material (2) applied to an extendible substrate (3) into individual sections (8,
wherein provision is made for an additional station (15) for pulling the individual sections (8) of the first web material (2) apart by stretching the substrate (3, and
wherein the additional station (15) is associated with a laminating device (16) for applying the relatively spaced sections (8) of the first web material (2) to the second web material (6).

10. A device for implementing the method of claim 2
wherein provision is made for a cutting station (10) for dividing the non-extendible substrate (3) and the first web material (2) applied thereto into individual sections (8) of the length (L) at least across the width of the first web material (2),
wherein provision is made for an additional station (15) for pulling the substrate (3) and hence the individual sections (8) of the first web material (2) apart in the area of the divisions, and
wherein the additional station (15) is associated with a laminating device (16) for applying the relatively spaced sections (8) of the first web material (2) to the second web material (6) .

11. The device as claimed in claim 9 or 10
wherein the individual stations (10; 14; 15) comprise each at least one pair of rolls (11; 12; 13).

12. The device as claimed in claim 11
wherein one roll of the pair of rolls (13) in the additional station (15) is constructed as a guide roll (19) for the laminate (20) formed from the first web material (2) and the substrate (3), and has a higher working speed (peripheral speed) than the pair or rolls (12) in the cutting station (10).

13. The device as claimed in claim 9 or 10
wherein the cutting device (21) and the laminating device (16) are arranged in one station (10, 15), and
wherein the cutting device (21) configured as a cylinder has a lower peripheral speed than the laminating device (16) configured as a cylinder.

14. The device as claimed in claim 11 or 13
wherein one roll (19') of the pair of rolls (13) has a larger circumference in the area in which the first web material (2) is guided than in the areas engaged by the projecting edges of the substrate (3).

15. A laminate for the manufacture of security elements for electronic article surveillance, fabricated according to the method described in claim 1 or in claims 3 to 7
wherein said laminate is composed of the following:
a first web material (2) which is divided into individual sections (8);
an extendible substrate (3) which is stretched such that the sections (8) are at a relative distance (a); and
a second web material (6) to which the sections (8) are applied.

16. A laminate for the manufacture of security elements for electronic article surveillance, fabricated according to the method described in claim 2
wherein said laminate is composed of the following:
a non-extendible substrate and a first web material (2) which are divided into individual sections (8) of the length (L) at least across the width of the first web material (2), wherein the non-extendible substrate (3) is pulled apart in the area of the divisions, such that the sections (8) of the first web material (2) are at a relative distance (a); and
a second web material (6) to which the sections (8) are applied.

17. The laminate as claimed in claim 15 or 16
wherein the first web material (2) is a soft magnetic material, and
wherein the second web material (6) is a paper or plastics material.

18. The laminate as claimed in claim 15 or 16
wherein the first web material (2) is a semi-hard or hard magnetic material, and
wherein the second web material (6) is a soft magnetic strip material.

## Revendications

1. Procédé pour réunir une première bande continue de matériau et une deuxième bande continue de matériau, dans lequel la première bande continue de matériau (2) est appliquée sur une couche porteuse étirable (3),dans lequel la première bande continue de matériau est divisée en sections individuelles (8) d'une longueur prédéterminée (L),dans lequel respectivement deux sections successives (8) de la première bande continue de matériau (2) sont séparées l'une de l'autre en étirant la couche porteuse (3), de sorte que les sections (8) ont une distance de séparation (a) prédéterminée, et les sections (8) sont appliquées avec une distance de séparation (a) sur la deuxième bande continue de matériau (6).

2. Procédé pour réunir une première bande continue de matériau et une deuxième bande continue de matériau, dans lequel la première bande continue de matériau (2) est appliquée sur une couche porteuse non étirable (3),dans lequel la première bande continue de matériau (2) et la couche porteuse non étirable (3) sont au moins divisées en sections individuelles (8) d'une longueur prédéterminée (L) sur la largeur de la première bande continue de matériau (2), dans lequel respectivement deux sections successives (8) de la première bande continue de matériau sont séparées l'une de l'autre, en séparant par traction la couche porteuse (3) dans la zone des divisions, de sorte que les sections (8) ont une distance de séparation (a) prédéterminée, et les sections (8) sont appliquées avec une distance de séparation (a) sur la deuxième bande continue de matériau (6).

3. Procédé selon la revendication 1, dans lequel la couche porteuse (3) est constituée d'un matériau élastique et présente une largeur qui est inférieure, égale ou supérieure à la largeur de la première bande continue de matériau (2).

4. Procédé selon la revendication 1, dans lequel la couche porteuse (3) est fabriquée à partir d'un matériau plastiquement déformable d'une faible limite élastique, mais d'une résistance à la déchirure suffisamment élevée, et présente une largeur qui est inférieure, égale ou supérieure à la largeur de la première bande continue de matériau (2).

5. Procédé selon l'une quelconque des revendications 1, 3 ou 4, dans lequel is couche porteuse (3) présente au maximum la largeur de la première bande continue de matériau (2) et seulement la première bande continue de matériau (2) est divisée en sections individuelles (8).

6. Procédé selon l'une quelconque des revendications 1, 3 ou 4, dans lequel la couche porteuse (3) est plus large que la première bande continue de matériau (2), et la première bande continue de matériau (2) et la couche porteuse (3) sont au moins divisées en sections individuelles (8) sur la largeur de la première bande continue de matériau (2).

7. Procédé selon la revendication 5, dans lequel la couche porteuse (3) est étirée dans la zone des divisions (9) de sorte que les sections (8) de la première bande continue de matériau (2) ont une distance de séparation (a) souhaitée.

8. Procédé selon la revendication 6, dans lequel la première bande continue de matériau (2) et la couche porteuse (3) sont séparées par traction dans la zone des divisions (9) de la première bande continue de matériau (2) et la couche porteuse (3) de sorte que les sections (8) individuelles ont une distance de séparation (a) souhaitée.

9. Dispositif de mise en oeuvre du procédé selon la revendication 1, dans lequel un poste de coupe (10) est prévu pour diviser la première bande continue de matériau (2) appliquée sur une couche porteuse (3) étirable, en sections individuelles (8), dans lequel un poste supplémentaire (15) est prévu pour séparer par traction les sections individuelles (8) de la première bande continue de matériau (2) en étirant la couche porteuse, et dans lequel le poste supplémentaire (15) est associé à un dispositif de stratification (16) pour appliquer les sections (8) espacées l'une de l'autre de la première bande continue de matériau (2) sur la deuxième bande continue de matériau (6).

10. Dispositif pour réaliser le procédé selon la revendication 2, dans lequel un poste de coupe (10) est prévu pour diviser la couche porteuse (3) non étirable et la première bande continue de matériau (2) appliquée sur celle-ci, en sections individuelles (8), au moins sur la largeur de la première bande continue de matériau (2), dans lequel un poste supplémentaire (15) est prévu pour séparer par traction la couche porteuse (3) et avec celle-ci, les sections individuelles (8) de la première bande continue de matériau (2) dans la zone des divisions, et dans lequel le poste supplémentaire (15) est associé à un dispositif de stratification (16) pour appliquer les sections (8) espacées les unes des autres de la première bande continue de matériau (2) sur la deuxième bande continue de matériau (6).

11. Dispositif selon l'une des revendications 9 ou 10, dans lequel les postes individuels (10; 14; 15) sont respectivement constitués d'au moins une paire de rouleaux (11; 12; 13).

12. Dispositif selon la revendication 11, dans lequel un rouleau de la paire de rouleaux (13) du poste supplémentaire (15) est formé en tant que rouleau de déviation (19) pour le stratifié (20) constitué de la première bande continue de matériau (2) et de la couche porteuse (3) et présente une vitesse de fonctionnement (vitesse périphérique) plus élevée que la paire de rouleaux (12) du poste de coupe (10).

13. Dispositif selon l'une des revendications 9 ou 10, dans lequel le dispositif de coupe (21) et l'installation de stratification (16) sont disposés dans un poste (10, 15) et dans lequel le dispositif de coupe (21) formé en tant que cylindre présente une vitesse périphérique plus faible que celle de l'installation de stratification (16) formée en tant que cylindre.

14. Dispositif selon l'une des revendications 11 ou 13, dans lequel un rouleau (19') de la paire de rouleaux (13) dans la zone dans laquelle est conduite la première bande continue de matériau, possède une circonférence plus grande que dans les zones dans lesquelles les bords saillants sont attenants à la couche porteuse (3).

15. Stratifié pour la préparation d'éléments de sûreté pour le dispositif électronique de sûreté d'articles, fabriqué selon le procédé décrit dans la revendication 1 ou celui décrit dans les revendications 3 à 7, dans lequel le stratifié présente la composition suivante :
une première bande continue de matériau (2), qui est divisée en sections individuelles (8);
une couche porteuse (3) qui est étirée de sorte que les sections (8) ont une distance de séparation (a);
une deuxième bande continue de matériau (6), sur laquelle sont appliquées les sections (8).

16. Stratifié pour la préparation d'éléments de sûreté pour le dispositif électronique de sûreté d'articles, fabriqué selon le procédé décrit dans la revendication 2 dans lequel le stratifié présente la composition suivante:
une couche porteuse non étirable (3) et une première bande continue de matériau (2), qui est divisée en sections individuelles (8) de longueur (L) au moins sur la largeur de la première bande continue de matériau (2),
dans lequel la couche porteuse non étirable (3) dans la zone des divisions est séparée par traction de sorte que les sections (8) de la première bande continue de matériau (2) ont une distance de séparation (a);
une deuxième bande continue de matériau (6), sur laquelle sont appliquées les sections (8).

17. Stratifié selon l'une des revendications 15 ou 16, dans lequel, quant à la première bande continue de matériau (2), il s'agit d'un matériau magnétique doux et dans lequel la deuxième bande continue de matériau (6) est fabriquée en papier ou en matière plastique.

18. Stratifié selon l'une des revendications 15 ou 16, dans lequel, quant à la première bande continue de matériau (2), il s'agit d'un matériau magnétique dur ou semi-dur et dans lequel la deuxième bande continue de matériau (6) est constituée d'un matériau de bande magnétique doux.
